(19) **Europäisches Patentamt / European Patent Office / Office européen des brevets**

(11) **EP 3 828 752 A1**

(12) **EUROPEAN PATENT APPLICATION**
published in accordance with Art. 153(4) EPC

(43) Date of publication:
**02.06.2021 Bulletin 2021/22**

(21) Application number: **18927978.9**

(22) Date of filing: **23.07.2018**

(51) Int Cl.:
*G06F 40/40* (2020.01)     *G06F 40/20* (2020.01)
*G06F 16/00* (2019.01)

(86) International application number:
**PCT/JP2018/027571**

(87) International publication number:
**WO 2020/021609 (30.01.2020 Gazette 2020/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Fujitsu Limited**
**Kawasaki-shi, Kanagawa 211-8588 (JP)**

(72) Inventors:
• **KATAOKA, Masahiro**
**Kawasaki-shi, Kanagawa 211-8588 (JP)**
• **ONOUE, Satoshi**
**Kawasaki-shi, Kanagawa 211-8588 (JP)**
• **NATSUME, Kota**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **GENERATION METHOD, GENERATION PROGRAM, AND INFORMATION PROCESSING APPARATUS**

(57)     An information processing apparatus (100) extracts a plurality of words included in text information. The information processing apparatus (100) refers to a storage unit that stores therein, for each of word meanings of the words, co-occurrence information on another word with respect to the words and specifies, from among the plurality of extracted words, a word meaning of the one of the words each including the plurality of word meanings based on the co-occurrence information on the other word with respect to the one of the words. The information processing apparatus (100) generates word meaning postscript text information that includes the one of the words and a character that identifies the specified word meaning.

FIG.5

INFORMATION PROCESSING APPARATUS (100)

CONTROL UNIT (160): RECEIVING UNIT (160a), WORD MEANING SPECIFYING UNIT (160b), WORD MEANING POSTSCRIPT TEXT GENERATING UNIT (160c), WORD MEANING VECTOR SPECIFYING UNIT (160d), LEARNING UNIT (160e), CONVERTING UNIT (106f), TEXT GENERATING UNIT (106g), NOTIFYING UNIT (106h)

COMMUNICATION UNIT (110), INPUT UNIT (120), DISPLAY UNIT (130)

STORAGE UNIT (150): WORD MEANING HMM (150a), FIRST VECTOR TABLE (150b), SECOND VECTOR TABLE (150c), TEACHER DATA TABLE (150d), RNN DATA (150e), INPUT DATA (150f), OUTPUT DATA (150g)

EP 3 828 752 A1

**Description**

Technical Field

The present invention relates to a generating method and the like.

Background Art

In recent years, neural machine translation (NMT) is used when a first language is translated into a second language that is different from the first language. Various models are present in neural machine translation and, for example, there is a model constructed from an encoder, a recurrent neural network (RNN), and a decoder (decoder).

The encoder is a processing unit that encodes a character string of an input sentence into words and assigns vectors to the words. The RNN converts the words that are input from the encoder and the vectors thereof based on the own parameter and outputs the converted vectors and the words. The decoder is a processing unit that decodes an output sentence based on the vectors and the words that are output from the RNN.

In the conventional technology, parameters of the RNN are learned by using teacher data such that an appropriate output sentence written in the second language is output from an input sentence written in the first language. In the parameters of the RNN, bias values and weights of an activation function are included. For example, in the conventional technology, parameters of the RNN are learned by providing, as learning data, a combination of an input sentence "She drinks cool juice." written in the first language and an output sentence "Kanojyo ha tumetai jyu-su wo nomu" written in the second language.

Incidentally, because words included in a sentence each have a plurality of word meanings and take different word meanings in accordance with the context, there is a conventional technology for estimating a word meaning of a certain word held in the target sentence. In this conventional technology, a sentence that includes an example sentence is extracted from a corpus, tag information associated with a word meaning of an arbitrary word is attached to the extracted sentence, and the sentence is output.

Citation List

Patent Literature

Patent Literature 1: Japanese Laid-open Patent Publication No. 2012-141679
Patent Literature 2: Japanese National Publication of International Patent Application No. 2017-511914
Patent Literature 3: Japanese Laid-open Patent Publication No. 2013-20431

Summary

Technical Problem

However, in the conventional technology described above, there is a problem in that it is not possible to improve translation accuracy of the text information.

In the encoder used for neural machine translation, an operation of converting each word included in the input sentence to vectors formed of hundreds of dimensions called distributed representation is performed. This operation is called "embedding" in order to reduce dependence on languages, such as the English language, the Japanese language, and the like. In the conventional technology, when embedding is performed, word meanings of words are not distinguished. For example, word meanings are different between "cool" used in "She drinks cool juice." and "cool" used in "He likes cool think". Here, in order to distinguish each of the words "cool", for convenience sake, "cool" used in "She drinks cool juice." is referred to as "cool(1)", and "cool" used in "He likes cool think." is referred to as "cool(2)".

Here, in the embedding technique used in the conventional technology, "cool(1)" and "cool(2)" are converted to a single piece of the same vector by Word2Vec. Consequently, in the conventional technology, because RNN machine learning is performed without distinguishing differences between the word meanings of "cool(1)" and "cool(2)", it is difficult to appropriately learn parameters with respect to words each including a plurality of word meanings. Thus, when words each including a plurality of word meanings are present in an input sentence, the input sentence is not translated into an appropriate output sentence, and therefore, the translation accuracy is reduced.

Furthermore, in order to calculate vectors in accordance with word meanings of words by Word2Ve, there is a need to obtain data that is obtained by performing morphological analysis on a text, that includes information that can distinguish words and the word meanings of the words, and that is written with a space between the words. Therefore, in Word2Vec, it is not possible to calculate vectors in accordance with word meanings of words even in a case of using data in which tag information is attached to the words.

Accordingly, it is an object in one aspect of an embodiment of the present invention to provide a generating method, a generating program, and an information processing apparatus that can generate vectors in accordance with word meanings of words and that can improve translation accuracy of text information.

Solution to Problem

According to an aspect of the embodiment of the invention, generating method includes receiving text information, using a processor; extracting a plurality of words included in the received text information, using the processor; specifying, from among the plurality of extracted words, by referring to a storage unit that stores therein, for each of word meanings of the words each including a plurality of word meanings, co-occurrence information on another word with respect to the words, a word meaning of one of the words each including the plurality of word meanings based on the co-occurrence information on the other word with respect to the one of the words, using the processor; and generating word meaning postscript text information that includes the one of the words and a character that identifies the specified word meaning, using the processor.

Advantageous Effects of Invention

According to an aspect of an embodiment, it is possible to generate vectors in accordance with word meanings of words. Furthermore, according to an aspect of an embodiment, it is possible to improve translation accuracy of text information.

Brief Description of Drawings

FIG. 1 is a diagram (1) illustrating a process performed by an information processing apparatus according to an embodiment.
FIG. 2 is a diagram illustrating a process of generating vectors of words.
FIG. 3 is a diagram (2) illustrating a process performed by the information processing apparatus according to the embodiment.
FIG. 4 is a diagram (3) illustrating a process performed by the information processing apparatus according to the embodiment.
FIG. 5 is a functional block diagram illustrating a configuration of the information processing apparatus according to the embodiment.
FIG. 6 is a diagram illustrating an example of a data structure of a first vector table according to the embodiment.
FIG. 7 is a diagram illustrating an example of a data structure of a second vector table according to the embodiment.
FIG. 8 is a diagram illustrating an example of a data structure of a teacher data table according to the embodiment.
FIG. 9 is a diagram illustrating an example of a data structure of RNN data according to the embodiment.
FIG. 10 is a diagram providing supplementary explanation of parameters of an intermediate layer.
FIG. 11 is a flowchart illustrating the flow of a process of a learning process performed by the information processing apparatus according to the embodiment.
FIG. 12 is a flowchart illustrating the flow of a process of a word meaning postscript process.
FIG. 13 is a flowchart illustrating the flow of a process of a translation process performed by the information processing apparatus according to the embodiment.
FIG. 14 is a diagram illustrating an example of a hardware configuration of a computer that implements the same function as that performed by the information processing apparatus according to the embodiment. Description of Embodiments

Preferred embodiment of a generating method, a generating program, and an information processing apparatus disclosed in the present invention will be explained in detail below with reference to the accompanying drawings. Furthermore, the present invention is not limited to the embodiments.

Embodiment

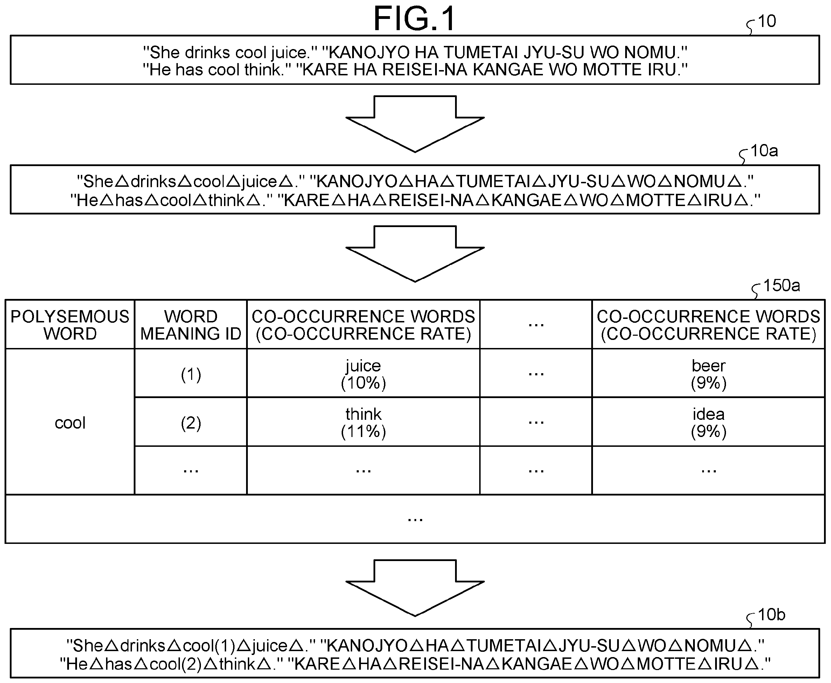

FIGS. 1 to 3 are diagrams each illustrating a process performed by an information processing apparatus according to the embodiment. When an input sentence 10 is provided, the information processing apparatus according to the embodiment splits, by performing a morphological analysis, a character string included in the input sentence 10 into words and generates a split input sentence 10a. For example, in the split input sentence 10a, each of the words is split by "Δ (space)".

For example, in the split input sentence 10a associated with the input sentence 10 of "She drinks cool juice.", the words "SheΔ", "drinksΔ", "coolΔ", "juiceΔ" are included. In the split input sentence 10a associated with the input sentence 10 of "Kanojyo ha tumetai jyu-su wo nomu.", the words "kanojyoΔ", "haΔ", "tumetaiΔ", "jyu-suΔ", "woΔ", and "nomuΔ" are included. In the split input sentence 10a associated with the input sentence 10 of "He has cool think.", the words "HeΔ" , "hasΔ" , "coolΔ", are "thinkΔ" included. In the split input sentence 10a associated with the input sentence 10 of "Kare ha reisei-na kangae wo motte iru.", the words "kareΔ", "haΔ", "reisei-naΔ", "kangaeΔ", "woΔ", "motteΔ", and "iruΔ" are included.

The information processing apparatus compares each of the words included in the split input sentence 10a with a word meaning hidden Markov model (HMM) 150a, specifies a word acting as a polysemous word, and specifies a word meaning (word meaning ID) of the word acting as a polysemous word. In a description below, the word acting as a polysemous word included in the split input sentence 10a is referred to as a "target word". The word meaning HMM 150a associates polysemous words, word meaning IDs, and a plurality of co-occurrence words (co-occurrence rate).

The polysemous words in the word meaning HMM 150a indicates the words each having a plurality of word meanings. The word meaning ID is information that uniquely identifies the word meaning included in the polysemous word. The co-occurrence word indicates the word that co-occurs with the polysemous word of a certain word meaning. In the embodiment, for convenience of description, the word meaning ID is indicated by a numeral in parentheses; however, the parentheses are used for convenience sake and it is assumed that, in practice, only a numeral that can identify the word meaning ID is attached. The co-occurrence word is associated with the co-occurrence rate. For example, when the polysemous word "cool" is used in the word meaning that is identified by the word meaning ID "(1)", information indicating that the probability of co-occurrence of "juice" before and after the polysemous word "cool" is "10%" is indicated. Although not illustrated, the word meaning of "cool" identified by the word meaning ID "(1)" is "tumetai".

When the polysemous word "cool" is used in the word meaning that is identified by the word meaning ID "(2)", information indicating that the probability of co-occurrence of "think" before and after the polysemous word "cool" is "11%" is indicated. Although not illustrated, the word meaning of "cool" identified by the word meaning ID "(2)" is "reisei-na".

When the information processing apparatus specifies the target word acting as a polysemous word, the information processing apparatus generates a word meaning postscript input sentence 10b by adding a postscript of word meaning ID to the target word. For example, the information processing apparatus determines that "coolΔ" is the target word by comparing the split input sentence 10a of "SheΔdrinksΔcoolΔjuiceΔ." with the word meaning HMM 150a. Furthermore, because "juice" is included before the split input sentence 10a, the information processing apparatus determines that the word meaning ID of the target word "cool" is "(1)". Consequently, by adding, as a postscript, the word meaning ID "(1)" to the target word "coolΔ", the information processing apparatus generates the word meaning postscript input sentence 10b "SheΔdrinksΔcool(1)Δjuice.".

The information processing apparatus determines that "coolΔ" is the target word by comparing the split input sentence 10a of "He has cool think." with the word meaning HMM 150a. Furthermore, because "think" is included after the split input sentence 10a, the information processing apparatus determines that the word meaning ID of the target word "cool" is "(2)". Consequently, by adding, as a postscript, the word meaning ID "(2)" to the target word "coolΔ", the information processing apparatus generates the word meaning postscript input sentence 10b "SheΔdrinksΔcool(2)ΔjuiceΔ.".

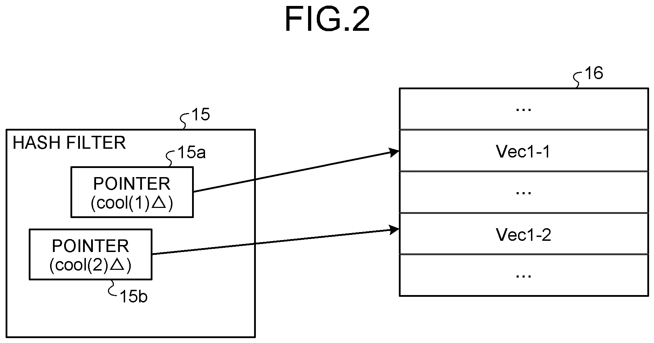

FIG. 2 is a diagram illustrating a process of generating vectors of the words. Here, as an example, vectors assigned to "cool(1)A" and "cool(2)Δ" will be described. The information processing apparatus uses a hash filter 15 and a vector table 16 and specifies vectors to be assigned to words. The hash filter 15 is a filter that associates hash values with pointers to the vector table 16. A vector is stored in each of areas in the vector table 16.

For example, the information processing apparatus calculates a hash value of "cool(1)Δ" and specifies a pointer 15a associated with the hash value of "cool(1)Δ". The information processing apparatus assigns a vector "Vec1-1" indicated by the pointer 15a as the vector of "cool(1)Δ". The information processing apparatus calculates a hash value of "cool(2)Δ" and specifies a pointer 15b associated with the hash value of "cool(2)Δ". The information processing apparatus assigns a vector "Vec1-2" indicated by the pointer 15b as the vector of "cool(2)Δ". In this way, different vectors are assigned by adding, as a postscript, the word meaning ID to the word,.

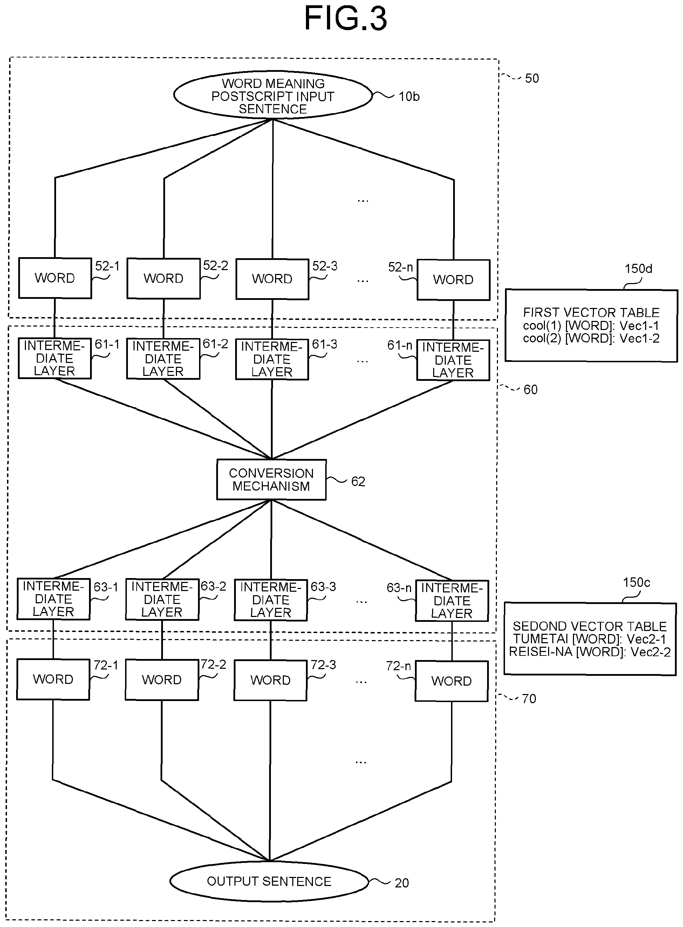

A description will be given here with reference to FIG. 3. In order to perform neural machine translation, the information processing apparatus according to the embodiment includes an encoder 50, a recurrent neural network (RNN) 60, and a decoder 70. By inputting a word meaning postscript input sentence generated from an input sentence written in the first language to the encoder 50, an output sentence written in the second language is output from the decoder 70 via the RNN 60.

The encoder 50 is a processing unit that assigns a vector to each of the words included in the word meaning postscript input sentence 10b. For example, the encoder 50 compares a first vector table 150b with the words and converts the words to first vectors. The first vector table 150b is a table that associates the words with the first vectors. The first vector is information associated with distributed representation. The encoder 50 outputs each of the first vectors to the RNN 60.

For example, the encoder 50 inputs each of the first vectors of corresponding words 52-1 to 52-n to intermediate layers 61-1 to 61-n, respectively.

The RNN 60 includes the intermediate layers (hidden layers) 61-1 to 61-n and 63-1 to 63-n and a conversion mechanism 62. Each of the intermediate layers 61-1 to 61-n and 63-1 to 63-n calculates a value based on its own set parameter and an input vector and then outputs the calculated value.

The intermediate layer 61-1 receives an input of the first vector of the static code 53-1, calculates a value based on the received vector and its own set parameter, and outputs the calculated value to the conversion mechanism 62. Similarly, each of the intermediate layers 61-2 to 61-n also receives an input of the first vectors associated with the static code, calculates a value based on the received vector and its own set parameter, and outputs the calculated value to the conversion mechanism 62.

The conversion mechanism 62 takes a role in judging, by using each of the values input from the associated intermediate layers 61-1 to 61-n and the internal state of the decoder 70 or the like as a basis for judgement, a portion to pay attention when a next word is translated. For example, the state is normalized such that the sum value of each of the probabilities is 1, such as the probability of focusing attention on the value of the intermediate layer 61-1 being set to 0.2, the probability of focusing attention on the intermediate layer 61-2 being set to 0.3, and the like.

The conversion mechanism 62 calculates a weighted sum of the distributed representation by summing values obtained by multiplying the value output from each of the intermediate layers 61-1 to 61-n by pieces of associated attention (probabilities). This is called a context vector. The conversion mechanism 62 inputs the context vector to the intermediate layers 63-1 to 63-n. The probabilities that are used to calculate the associated context vectors that are input to the intermediate layers 63-1 to 63-n are re-calculated and the portion to be focused on varies each time.

The intermediate layer 63-1 receives the context vector from the conversion mechanism 62, calculates a value based on the received context vector and its own set parameter, and outputs the calculated value to the decoder 70. Similarly, each of the intermediate layers 63-2 to 63-n also receives the associated context vector, calculates a value based on the received vector and its own set parameter, and outputs the calculated value to the decoder 70.

The decoder 70 compares each of the values (second vectors) output from the intermediate layers 63-1 to 63-n with a second vector table 150c and converts the second vectors to words. The second vector table 150c is a table that associates the words with the second vectors. The second vector is information corresponding to distributed representation.

The decoder 70 compares the second vector output from the intermediate layer 63-1 with the second vector table 150c and generates a word 72-1. Similarly, the decoder 70 compares each of the second vectors output from the corresponding intermediate layers 63-2 to 63-n with the second vector table 150c and generates words 72-2 to 71-n. The decoder 70 generates an output sentence 20 by combining each of the words 72-1 to 72-n. The output sentence 20 is text information obtained by translating the input sentence.

Here, when the information processing apparatus according to the embodiment learns parameters of the RNN 60, the information processing apparatus receives a combination of an input sentence written in the first language and an output sentence written in the second language that act as teacher data. In the embodiment, a description will be given with the assumption that the first language is the English language and the second language is the Japanese language; however, the languages are not limited to these. The information processing apparatus converts the input sentence of the teacher data to the word meaning postscript input sentence 10b and learns the parameters of the RNN 60 such that an output sentence of the teacher data is output from the decoder 70 when the input sentence is input to the encoder 50.

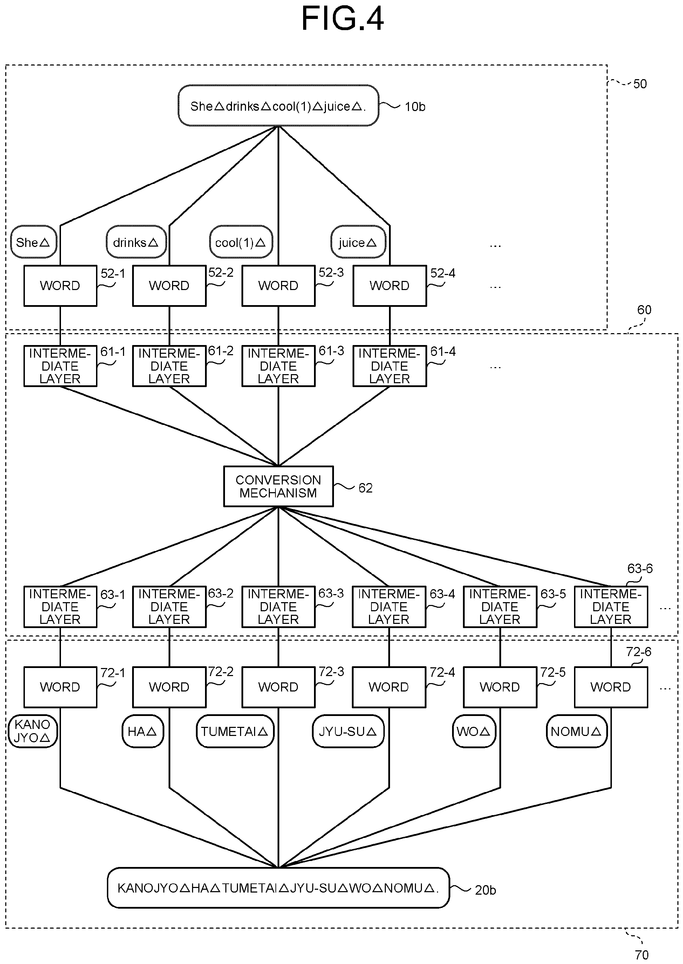

A description will be given here with reference to FIG. 4. In the example illustrated in FIG. 4, an input sentence of "She drinks cool juice." and an output sentence of "Kanojyo ha tumetai jyu-su wo nomu." are used as the teacher data. The information processing apparatus performs the process described below based on the teacher data of "She drinks cool juice.", and calculates each of the first vectors that are input to the corresponding intermediate layers 61-1 to 61-n in the RNN 60. The information processing apparatus performs the process described with reference to FIG. 1 and converts the input sentence of "She drinks cool juice." to the word meaning postscript input sentence 10b of "SheΔ drinksΔcoolΔjuiceΔ.".

The information processing apparatus specifies the first vector of "SheA" based on the word "SheA" in the word meaning postscript input sentence 10b and based on the first vector table 150b and sets the specified result to the first vector that is input to the intermediate layer 61-1.

The information processing apparatus specified the first vector of "drinksΔ" based on the word "drinksΔ" in the word meaning postscript input sentence 10b and based on the first vector table 150b and sets the specified result to the first vector that is input to the intermediate layer 61-2.

The information processing apparatus specifies the first vector of "cool(1)Δ" based on the word "cool(1)Δ" in the word meaning postscript input sentence 10c and based on the first vector table 150b and sets the specified result to the first vector that is input to the intermediate layer 61-3.

The information processing apparatus specifies the first vector of "juiceΔ" based on the word "juiceΔ" in the word meaning postscript input sentence 10c and based on the first vector table 150b and sets the specified result to the first vector that is input to the intermediate layer 61-4.

Subsequently, the information processing apparatus performs the process described below based on the output sentence of "Kanojyo ha tumetai jyu-su wo nomu." that is the teacher data and calculates "optimum second vectors" that are output from the associated intermediate layers 63-1 to 63-n in the RNN 60. Similarly to the process described with reference to FIG. 1, the information processing apparatus converts the output sentence "Kanojyo ha tumetai jyu-su wo nomu." to a word meaning postscript output sentence 20b of "kanojyoΔhaΔtumataiΔjyu-suΔwoΔnomuΔ". Here, as an example, it is assumed that a polysemous word is not included in the output sentence "Kanojyo ha tumetai jyu-su wo nomu".

The information processing apparatus specifies the second vector of "kanojyoΔ" based on the word "kanojyoΔ" in the word meaning postscript output sentence 20b and based on the second vector table 150c and sets the specified second vector to an ideal value of the second vector that is output from the intermediate layer 63-1.

The information processing apparatus specifies the second vector of "haΔ" based on the word "haΔ" in the word meaning postscript output sentence 20b and based on the second vector table 150c and sets the specified second vector to an ideal value of the second vector that is output from the intermediate layer 63-2.

The information processing apparatus specifies the second vector of "tumetaiΔ" based on the word "tumetaiΔ" in the word meaning postscript output sentence 20b and based on the second vector table 150c and sets the specified second vector to an ideal value of the second vector that is output from the intermediate layer 63-3.

The information processing apparatus specifies the second vector of "jyu-suΔ" based on the word "jyu-suΔ" in the word meaning postscript output sentence 20b and based on the second vector table 150c and sets the specified second vector to an ideal value of the second vector that is output from the intermediate layer 63-4.

The information processing apparatus specifies the second vector of "woΔ" based on the word "woΔ" in the word meaning postscript output sentence 20b and based on the second vector table 150c and sets the specified second vector to an ideal value of the second vector that is output from the intermediate layer 63-5.

The information processing apparatus specifies the second vector of "nomuΔ" based on the word "nomuΔ" in the word meaning postscript output sentence 20b and based on the second vector table 150c and sets the specified second vector to an ideal value of the second vector that is output from the intermediate layer 63-6.

As described above, the information processing apparatus uses the teacher data and specifies each of the first vectors that is input to the corresponding intermediate layers 61-1 to 61-n in the RNN 60 and the ideal second vectors that are output from the corresponding intermediate layers 63-1 to 63-n in the RNN 60. By inputting each of the specified the first vector to the corresponding intermediate layers 61-1 to 61-n in the RNN 60, the information processing apparatus performs a process of adjusting the parameters that are set in the RNN 60 such that the second vectors that are output from the corresponding intermediate layers 63-1 to 63-n approach the ideal second vector.

Here, when the information processing apparatus according to the embodiment acquires the teacher data, the information processing apparatus determines whether a polysemous word (target word) is included in the teacher data based on the teacher data and the word meaning HMM 150a. When the target word is included, the information processing apparatus specifies the word meaning ID of the target word and generates text information (a word meaning postscript input sentence and a word meaning postscript output sentence) in which a combination of the target word and the word meaning ID is set to a single word. The information processing apparatus learns the parameters of the RNN 60 by using the generated word meaning postscript input sentence and the word meaning postscript output sentence. In the embodiment, because a combination of the target word and the word meaning ID is considered as a single word and is converted to a vector, it is possible to perform learning in a state in which the word meaning of the word can be distinguished. Consequently, it is possible to improve translation accuracy of the text information.

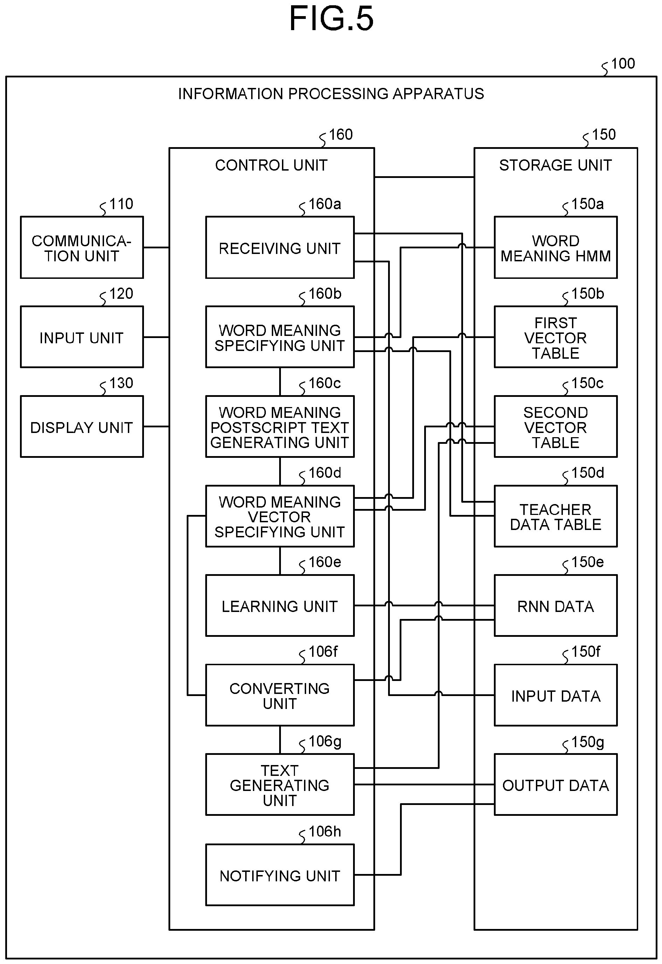

In the following, a configuration of the information processing apparatus according to the embodiment will be described. FIG. 5 is a functional block diagram illustrating a configuration of the information processing apparatus according to the embodiment. As illustrated in FIG. 5, an information processing apparatus 100 includes a communication unit 110, an input unit 120, a display unit 130, a storage unit 150, and a control unit 160.

The communication unit 110 is a processing unit that performs data communication with an external device via a network. The communication unit 110 is an example of a communication device. For example, the information processing apparatus 100 may also be connected to the external device via the network and receive a teacher data table 150d or the like from the external device.

The input unit 120 is an input device for inputting various kinds of information to the information processing apparatus 100. For example, the input unit 120 corresponds to a keyboard, a mouse, a touch panel, or the like.

The display unit 130 is a display device for displaying various kinds of information output from the control unit 160. For example, the display unit 130 corresponds to a liquid crystal display, a touch panel, or the like.

The storage unit 150 includes the word meaning HMM 150a, the first vector table 150b, the second vector table 150c, and the teacher data table 150d. Furthermore, the storage unit 150 includes RNN data 150g, input sentence data 150h, and output sentence data 150i. The storage unit 150 corresponds to a semiconductor memory device, such as a random access memory (RAM), a read only memory (ROM), and a flash memory, or a storage device, such as a hard disk drive (HDD).

The word meaning HMM 150a is information that associates a polysemous word, the word meaning ID, and a plurality of co-occurrence words (co-occurrence rate). The data structure of the word meaning HMM 150a corresponds to the data structure of the word meaning HMM 150a illustrated in FIG. 1.

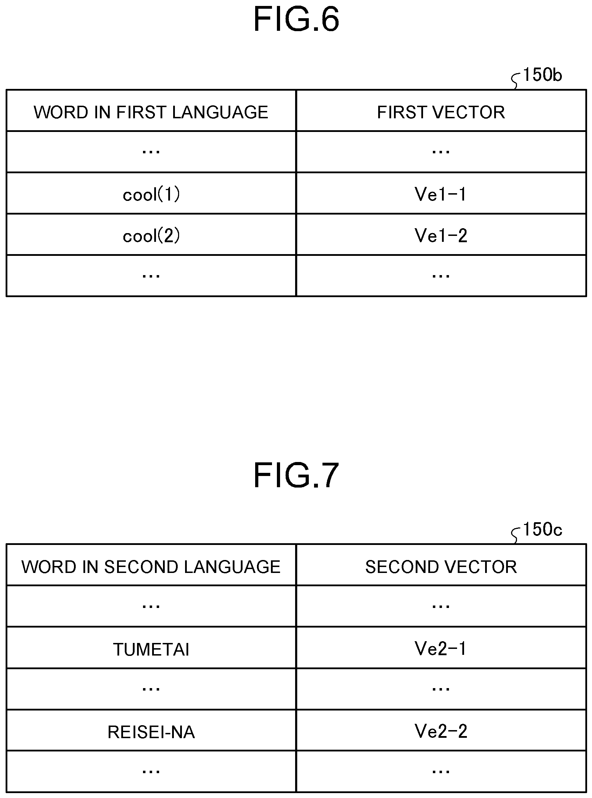

The first vector table 150b is a table that associates a word of the first language with the first vector. The first vector is an example of the word meaning vector. FIG. 6 is a diagram illustrating an example of the data structure of the first vector table according to the embodiment. As illustrated in FIG. 6, the first vector table 150b associates word written in the first language with the first vector. For example, the word "cool(1)" written in the first language is associated with a first vector "Ve1-1". The first vector is information associated with distributed representation.

The second vector table 150c is a table that associates a word written in the second language with the second vector. The second vector is an example of a word meaning vector. FIG. 7 is a diagram illustrating an example of the data structure of the second vector table according to the embodiment. As illustrated in FIG. 7, the second vector table 150c associates a word written in the second language with the second vector. For example, the word "tumetai" written in the second language is associated with a second vector "Ve2-1". The second vector is information associated with distributed representation.

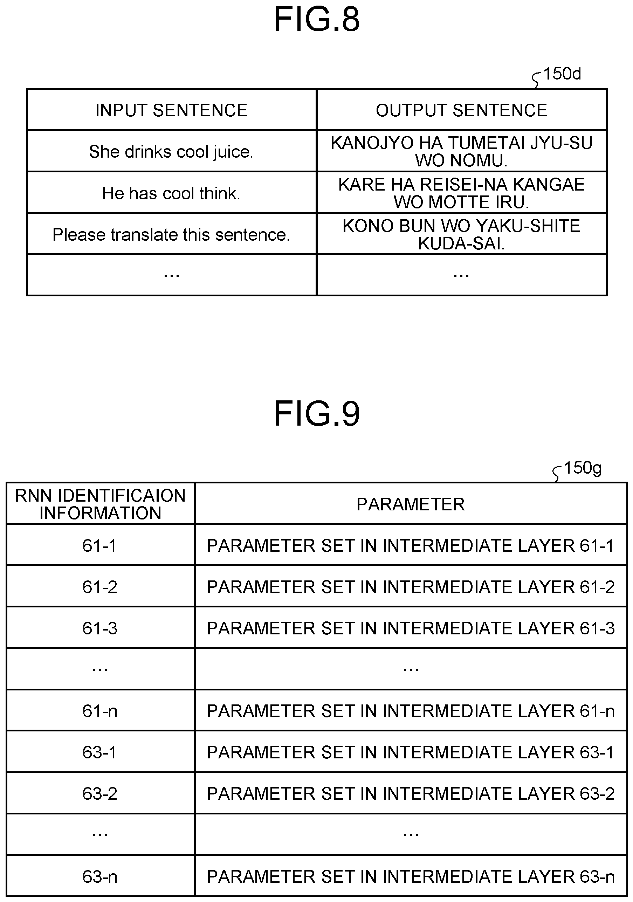

The teacher data table 150d is a table that holds a combination of an input sentence and an output sentence acting as the teacher data. FIG. 8 is a diagram illustrating an example of the data structure of the teacher data table according to the embodiment. As illustrated in FIG. 8, the teacher data table 150d associates the input sentences with the output sentences. For example, an appropriate output sentence obtained when the input sentence "She drinks cool juice." written in the first language is translated into the second language is "Kanojyo ha tumetai jyu-su wo nomu", which is indicated by the teacher data.

The RNN data 150g is a table that holds parameters and the like that are set in each of the intermediate layers in the RNN 60 described with reference to FIGS. 3 and 4. FIG. 9 is a diagram illustrating an example of the data structure of the RNN data according to the embodiment. As illustrated in FIG. 9, the RNN data 150g associates RNN identification information with the parameters. The RNN identification information is information that uniquely identifies the intermediate layers in the RNN 60. The parameters indicates the parameters that are set in the corresponding intermediate layers. The parameters each correspond to bias values or weights that are used in an activation function and that are set in the intermediate layers.

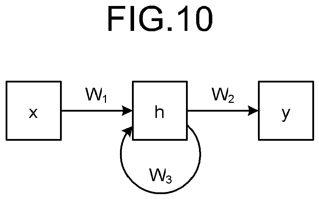

FIG. 10 is a diagram providing a supplementary explanation of parameters of an intermediate layer. FIG. 10 illustrates an input layer "x", an intermediate layer (hidden layer) "h", and an output layer "y". The intermediate layer "h" corresponds to the intermediate layers 61-1 to 61-n and 63-1 to 63-n illustrated in FIG. 3 or the like.

The relationship between the intermediate layer "h" and the input layer "x" is defined by Equation (1) by using an activation function f, where $W_1$ and $W_3$ in Equation (1) denote weights that are adjusted to optimum values based on learning performed by the teacher data and t denotes time (how many words are read).

$$h_t = f\left(W_1 x_t + W_3 h_{t-1}\right) \qquad (1)$$

The relationship between the intermediate layer "h" and the output layer "y" is defined by Equation (2) by using an activation function g, where $W_2$ in Equation (2) denotes a weight that is adjusted to an optimum value based on learning performed by the teacher data. Furthermore, a softmax function may also be used as the activation function g.

$$y_t = g\left(W_2 h_t\right) \qquad (2)$$

The input sentence data 150h is data of an input sentence acting as the translation target. For example, it is assumed that the input sentence data 150h is "She drinks cool juice." or the like written in the first language.

The output sentence data 150i is data obtained by translating the input sentence data 150h. For example, when the input sentence data is "She drinks cool juice." and the parameter in the RNN data 150g is appropriately learned, the output sentence data is "Kanojyo ha tumetai jyu-su wo nomu".

The control unit 160 includes a receiving unit 160a, a word meaning specifying unit 160b, a word meaning postscript text generating unit 160c, a word meaning vector specifying unit 160d, a learning unit 160e, a converting unit 160f, a text generating unit 160g, and a notifying unit 160h. The control unit 160 can be implemented by a central processing unit (CPU), a micro processing unit (MPU), or the like. Furthermore, the control unit 160 may also be implemented by hard-wired logic, such as an application specific integrated circuit (ASIC) or a field programmable gate array (FPGA). For example, it is assumed that the processes performed by the encoder 50, the RNN 60, and the decoder 70 are implemented by the control unit 160.

First, a description will be given of a process performed when the information processing apparatus 100 according to the embodiment learns the RNN data 150g corresponding to the parameters of the RNN 60. When the information processing apparatus 100 learns the RNN data 150g, the receiving unit 160a, the word meaning specifying unit 160b, the word meaning postscript text generating unit 160c, the word meaning vector specifying unit 160d, and the learning unit 160e are operated from among the processing units included in the control unit 160.

The receiving unit 160a receives the teacher data table 150d from an external device via a network. The receiving unit 160a stores the received teacher data table 150d in the storage unit 150. The receiving unit 160a may also receive the teacher data table 150d from the input unit 120.

The word meaning specifying unit 160b specifies the word meaning of the word in the input sentence included in the teacher data table 150d based on the word meaning HMM 150a. The word meaning specifying unit 160b splits the input sentence into a plurality of words by performing morphological analysis on the input sentence included in the teacher data table 150d, and then, generates a split input sentence. For example, the word meaning specifying unit 160b generates the split input sentence "She△drinks△cool△juice." based on "She drinks cool juice". In the split input sentence, each of the words is segmented by "△ (space)".

The word meaning specifying unit 160b compares each of the words included in the split input sentence with the word meaning HMM 150a and specifies a target word. Furthermore, the word meaning specifying unit 160b compares the words before and after the target word included in the split input sentence with the word meaning HMM 150a and specifies the word meaning ID of the target word. For example, the target word "cool△" is included in the split input sentence "She△drinks△cool△juice△." and the word meaning ID of this target word is "(1)".

Also, regarding the output sentence in the teacher data table 150d, the word meaning specifying unit 160b splits the output sentence into a plurality of words by performing morphological analysis on the output sentence and generates the split output sentence. For example, the word meaning specifying unit 160b generates the split output sentence "Kanojyo△ha△tumetai△jyu-su△wo△nomu△." based on "Kanojyo ha tumetai jyu-su wo nomu".

The word meaning specifying unit 160b compares each of the words included in the split output sentence with the word meaning HMM 150a and specifies a target word. Furthermore, the word meaning specifying unit 160b compares the words before and after the target word included in the split output sentence with the word meaning HMM 150a and specifies the word meaning ID of the target word. Furthermore, it is assumed that the target word is not included in the split output sentence "Kanojyo△ha△tumetai△jyu-su△wo△nomu△".

The word meaning specifying unit 160b outputs word meaning specified results of the input sentence and the output sentence to the word meaning postscript text generating unit 160c. The word meaning specified result includes therein a split input sentence and word meaning ID of each of the target word included in the split input sentence and the target word included in the split input sentence. Furthermore, the word meaning specified result includes therein the split output sentence and the word meaning ID of each of the target word included in the split output sentence and the target word included in the split output sentence. When the target word is not included, the information related to the target word and the word meaning ID is blank.

The word meaning postscript text generating unit 160c is a processing unit that generates, based on the word meaning specified result acquired from the word meaning specifying unit 160b, text information in which the word meaning ID is added, as a postscript, to the target word. When a target word is included in the split input sentence, the word meaning postscript text generating unit 160c generates a word meaning postscript input sentence by adding, as a postscript, the word meaning ID after the target word. For example, when the word meaning ID of the target word "cool△" of the split input sentence "She△drinks△cool△juice△." is "(1)", the word meaning postscript text generating unit 160c generates the word meaning postscript input sentence "She△drinks△cool(1)△juice△".

When the target word is included in the split output sentence, the word meaning postscript text generating unit 160c generates a word meaning postscript output sentence by adding, as a postscript, the word meaning ID after the target word. For example, when the word meaning ID of the target word "amai" in the split output sentence "Ringo△ga△ amai△." is "(1)", the word meaning postscript text generating unit 160c generates the word meaning postscript output sentence "Ringo△ga△amai(1)△". Furthermore, when the target word is not present in the split output sentence, such as "Kanojyo△ha△tumetai△jyu-su△wo△nomu△", the word meaning postscript text generating unit 160c treates the split output sentence "Kanojyo△ha△tumetai△jyu-su△wo△nomu△." in which the word meaning ID is not added as the word meaning postscript output sentence.

The word meaning postscript text generating unit 160c performs the process described above and outputs the word meaning postscript input sentence and the word meaning postscript output sentence to the word meaning vector specifying unit 160d.

The word meaning vector specifying unit 160d specifies the word meaning vector of each of the words included in the word meaning postscript input sentence and the word meaning vector of each of the words included in the word meaning postscript output sentence. In a description below, the word meaning vector of the word in the word meaning postscript input sentence is referred to as the "first vector". The word meaning vector of the word in the word meaning postscript output sentence is referred to as the "second vector". The word meaning vector specifying unit 160d outputs the information on the first vector and the second vector of each of the words to the learning unit 160e.

An example of a process in which the word meaning vector specifying unit 160d specifies the first vector will be described. The word meaning vector specifying unit 160d specifies each of the first vectors associated with the corresponding words by comparing each of the words included in the word meaning postscript input sentence with the first vector table 150b.

An example of a process in which the word meaning vector specifying unit 160d specifies the second vector will be described. The word meaning vector specifying unit 160d specifies each of the second vectors associated with the corresponding words by comparing each of the words included in the word meaning postscript output sentence with the second vector table 150c.

By performing the process described above, the word meaning vector specifying unit 160d generates information on each of the first vectors of the input sentence in the teacher data table 150d and each of the second vectors of the output sentence associated with this input sentence and outputs information on each of the first vectors and each of the second vectors to the learning unit 160e.

The learning unit 160e uses the parameters of each of the intermediate layers registered in the RNN data 150g, inputs each of the first vectors to the corresponding intermediate layers 61-1 to 61-n in the RNN 60, and calculates each of the vectors that is output from the corresponding intermediate layers 63-1 to 63-n. The learning unit 160e learns the parameter of each of the intermediate layers registered in the RNN data 150g such that each of the vectors output from the corresponding intermediate layers 63-1 to 63-n in the RNN 60 approach the corresponding second vectors.

For example, the learning unit 160e may also perform learning by using a cost function in which a difference between each of the vectors output from the corresponding intermediate layers 63-1 to 63-n and the second vector is defined and adjusting the parameter of each of the intermediate layers so as to minimize the difference.

The word meaning specifying unit 160b, the word meaning postscript text generating unit 160c, the word meaning vector specifying unit 160d, and the learning unit 160e learn the parameters in the RNN data 150g by repeatedly performing the process described above while changing the teacher data.

Subsequently, a description will be given of a process in which the information processing apparatus 100 according to the embodiment generates the output sentence data 150i obtained by translating the input sentence data 150h using the learned RNN data 150g. When a translation process is performed, the receiving unit 160a, the word meaning specifying unit 160b, the word meaning postscript text generating unit 160c, the word meaning vector specifying unit 160d, the converting unit 160f, the text generating unit 160g, and the notifying unit 160h are operated from among each of the processing units included in the control unit 160.

The receiving unit 160a receives the input sentence data 150h from an external device via a network. The receiving unit 160a stores the received input sentence data 150h in the storage unit 150.

The word meaning specifying unit 160b specifies the word meanings of the words included in the input sentence in the input sentence data 150h based on the word meaning HMM 150a. The word meaning specifying unit 160b splits the input sentence into a plurality of words by performing morphological analysis on the input sentence data (input sentence) 150h and generates a split input sentence.

The word meaning specifying unit 160b compares each of the words included in the split input sentence with the word meaning HMM 150a and specifies a target word. Furthermore, the word meaning specifying unit 160b compares the words before and after the target word included in the split input sentence with the word meaning HMM 150a and specifies the word meaning ID of the target word.

The word meaning specifying unit 160b outputs the word meaning specified result of the input sentence to the word meaning postscript text generating unit 160c. The word meaning specified result includes therein the split input sentence and the word meaning ID of each of the target word included in the split input sentence and the target word included in the split input sentence.

The word meaning postscript text generating unit 160c is a processing unit that generates, based on the word meaning specified result acquired from the word meaning specifying unit 160b, text information in which the word meaning ID is added, as a postscript, to the target word. When the target word is included in the split input sentence, the word meaning postscript text generating unit 160c generates a word meaning postscript input sentence by adding, as a postscript, the word meaning ID after the target word. The word meaning postscript text generating unit 160c outputs the word meaning postscript input sentence to the word meaning vector specifying unit 160d.

The word meaning vector specifying unit 160d specifies the word meaning vector of each of the words included in the word meaning postscript input sentence. The word meaning vector specifying unit 160d specifies each of the first vectors associated with the corresponding static codes by comparing each of the words in the word meaning postscript input sentence with the first vector table 150b. The word meaning vector specifying unit 160d outputs each of the specified first vectors to the converting unit 160f.

The converting unit 160f uses the parameter of each of the intermediate layers 61-1 to 63-n registered in the RNN data 150g and inputs each of the first vectors to the corresponding intermediate layers 61-1 to 61-n in the RNN 60. The converting unit 160f converts each of the first vectors to the corresponding second vectors by acquiring each of the second vectors output from the corresponding intermediate layers 63-1 to 63-n in the RNN 60. The converting unit 160f outputs each of the converted second vectors to the text generating unit 160g.

The text generating unit 160g is a processing unit that generates the output sentence data 150i by using each of the second vectors acquired from the converting unit 160f. In the following, an example of a process performed by the text generating unit 160g will be described.

The text generating unit 160g compares each of the second vectors with the second vector table 150c and specifies the word associated with each of the second vectors. The text generating unit 160g generates the output sentence data 150i by arranging the specified words. Furthermore, when the word meaning ID is added, as a postscript, to the word included in the output sentence data 150i, the text generating unit 160g deletes the added word meaning ID. The generating unit 160g stores the generated output sentence data 150i in the storage unit 150.

The notifying unit 160h is a processing unit that notifies the external device of the output sentence data 150i generated by the text generating unit 160g. For example, the notifying unit 160 notifies the external device corresponding to the transmission source of the input sentence data 150h of the output sentence data 150i.

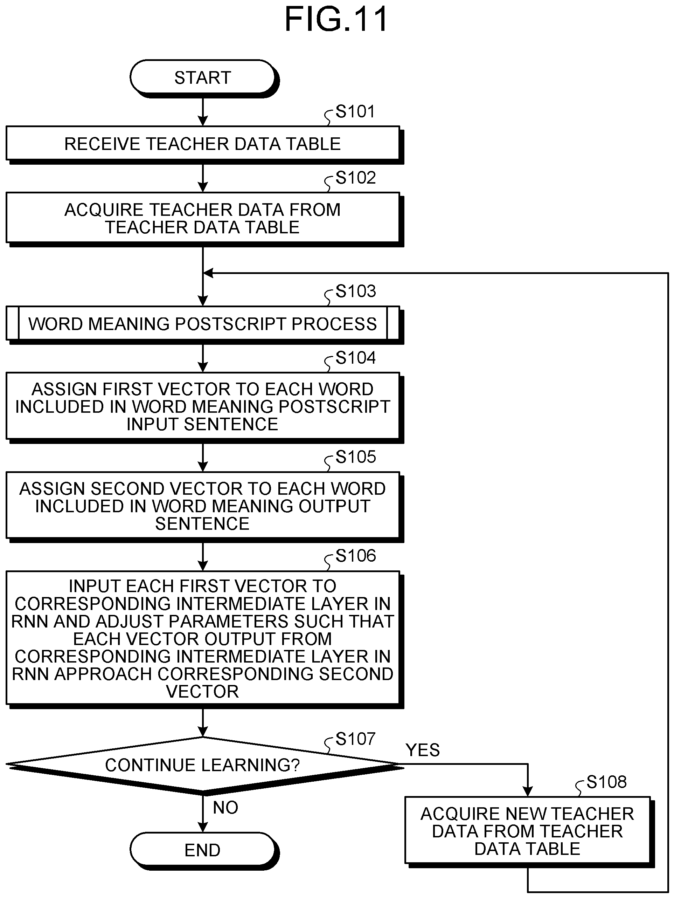

In the following, an example of the flow of a process of learning parameters performed by the information processing apparatus according to the embodiment will be described. FIG. 11 is a flowchart illustrating the flow of the learning process performed by the information processing apparatus according to the embodiment. As illustrated in FIG. 11, the receiving unit 160a in the information processing apparatus 100 receives the teacher data table 150d (Step S101).

The word meaning specifying unit 160b in the information processing apparatus 100 acquires the teacher data from the teacher data table 150d (Step S102). The word meaning specifying unit 160b and the word meaning postscript text generating unit 160c in the information processing apparatus 100 perform a word meaning postscript process (Step S103).

The word meaning vector specifying unit 160d in the information processing apparatus 100 assigns each of the first vectors to the corresponding words included in the word meaning postscript input sentence (Step S104).

The word meaning vector specifying unit 160d assigns each of the second vectors to the corresponding words included in the word meaning postscript output sentence (Step S105).

The learning unit 160e in the information processing apparatus 100 inputs each of the first vectors to the corresponding intermediate layers in the RNN 60 and adjusts the parameters such that each of the vectors output from the corresponding intermediate layers in the RNN 60 approach the corresponding second vectors (Step S106).

The information processing apparatus 100 determines whether or not to continue the learning (Step S107). When the information processing apparatus 100 continue the learning (Yes at Step S107), the word meaning specifying unit 160b acquires new piece of teacher data from the teacher data table 150d (Step S108) and proceeds to Step S103. In contrast, when the information processing apparatus 100 does not continue the learning (No at Step S107), the information processing apparatus 100 ends the process.

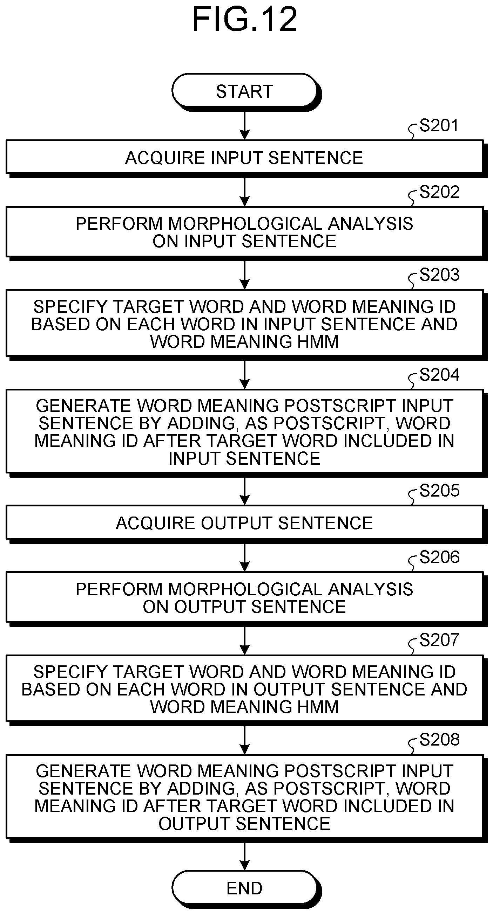

In the following, an example of the flow of a word meaning postscript process indicated at Step S103 in FIG. 11. FIG. 12 is a flowchart illustrating the flow of the word meaning postscript process. As illustrated in FIG. 12, the word meaning specifying unit 160b in the information processing apparatus 100 acquires an input sentence (Step S201). The word meaning specifying unit 160b performs morphological analysis on the input sentence (Step S202). The word meaning specifying unit 160b specifies the target word and the word meaning ID based on each of the words included in the input sentence and the word meaning HMM 150a (Step S203) .

The word meaning postscript text generating unit 160c in the information processing apparatus 100 generates a word meaning postscript input sentence by adding, as a postscript, the word meaning ID after the target word that is included in the input sentence (Step S204).

The word meaning specifying unit 160b acquires the output sentence (Step S205). The word meaning specifying unit 160b performs morphological analysis on the output sentence (Step S206). The word meaning specifying unit 160b specifies the target words and the word meaning IDs based on each of the words included in the output sentence and the word meaning HMM 150a (Step S207).

The word meaning postscript text generating unit 160c generates a word meaning postscript output sentence by adding, as a postscript, the word meaning ID after the target word included in the input sentence (Step S208).

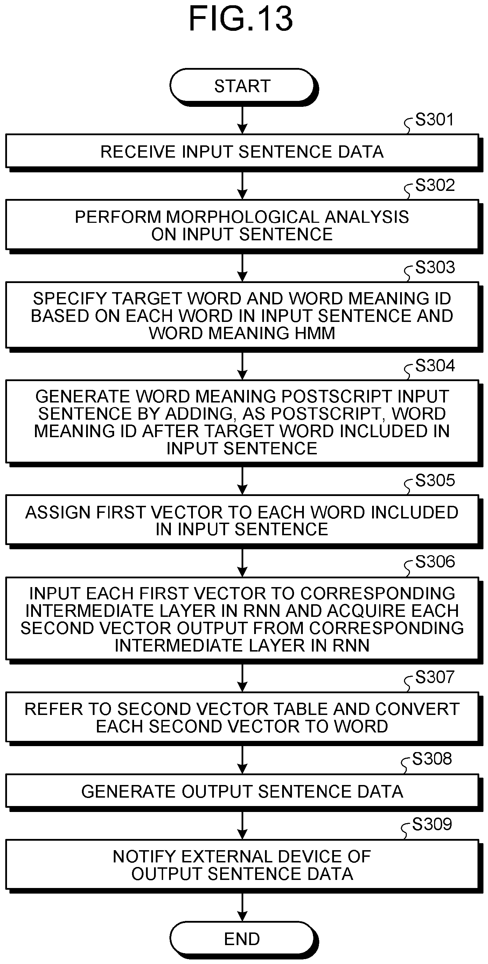

In the following, an example of the flow of a translation process performed by the information processing apparatus according to the embodiment will be described. FIG. 13 is a flowchart illustrating the flow of the translation process performed by the information processing apparatus according to the embodiment. As illustrated in FIG. 13, the receiving unit 160a in the information processing apparatus 100 receives the input sentence data 150h (Step S301).

The word meaning specifying unit 160b in the information processing apparatus 100 performs morphological analysis on the input sentence (Step S302). The word meaning specifying unit 160b specifies the target words and the word meaning IDs based on each of the words in the input sentence and the word meaning HMM 150a (Step S303).

The word meaning postscript text generating unit 160c in the information processing apparatus 100 generates a word meaning postscript input sentence by adding, as a postscript, the word meaning ID after the target word included in the input sentence (Step S304).

The word meaning vector specifying unit 160d in the information processing apparatus 100 assigns each of the first vectors to the corresponding words included in the input sentence (Step S305).

The converting unit 160f in the information processing apparatus 100 inputs each of the first vectors to the corresponding intermediate layers 61-1 to 61-n in the RNN 60 and acquires each of the second vectors output from the corresponding intermediate layers 63-1 to 63-n in the RNN 60 (Step S306).

The text generating unit 160g in the information processing apparatus 100 refers to the second vector table 150c and converts each of the second vectors to words (Step S307). The text generating unit 160g generates the output sentence data 150i (Step S308). The notifying unit 160h in the information processing apparatus 100 notifies an external device of the output sentence data 150i (Step S309) .

In the following, the effects of the information processing apparatus 100 according to the embodiment will be described. When the information processing apparatus 100 acquires the teacher data, the information processing apparatus 100 determines whether a polysemous word (target word) is included in the teacher data based on the teacher data and the word meaning HMM 150a. When the target word is included, the information processing apparatus 100 specifies the word meaning ID of the target word and generates the text information (a word meaning postscript input sentence and a word meaning postscript output sentence) in which a combination of the target word and the word meaning ID is set to a single word. The information processing apparatus 100 learns the parameters of the RNN 60 by using the generated word meaning postscript input sentence and the word meaning postscript output sentence. In the embodiment, because a combination of the target word and the word meaning ID is considered as a single word and is converted to a vector, it is possible to perform learning in a state in which the word meaning of the word can be distinguished. Consequently, it is possible to improve translation accuracy of the text information.

For example, when the information processing apparatus 100 inputs the first vector generated from the word meaning postscript input sentence to the RNN 60, the information processing apparatus 100 adjusts the parameters of the RNN 60 such that each of the vectors output from the RNN 60 approaches the second vector generated from the word meaning postscript output sentence. In this way, by converting the teacher data to a word meaning vector that can distinguish the word meaning of a polysemous word, it is possible to efficiently learning parameters of the RNN 60.

When the information processing apparatus 100 receives an input sentence acting as a translation target after learning the parameters of the RNN, the information processing apparatus 100 determines whether a polysemous word (target word) is included in the input sentence. When a target word is included in the input sentence, the information processing apparatus 100 specifies the word meaning ID of the target word and generates text information (word meaning postscript input sentence) in which a combination of the target word and the word meaning ID is set to a single word. By inputting the generated word meaning postscript input sentence to the RNN 60, the information processing apparatus 100 can generate the output sentence data 150i corresponding to an optimum translation result.

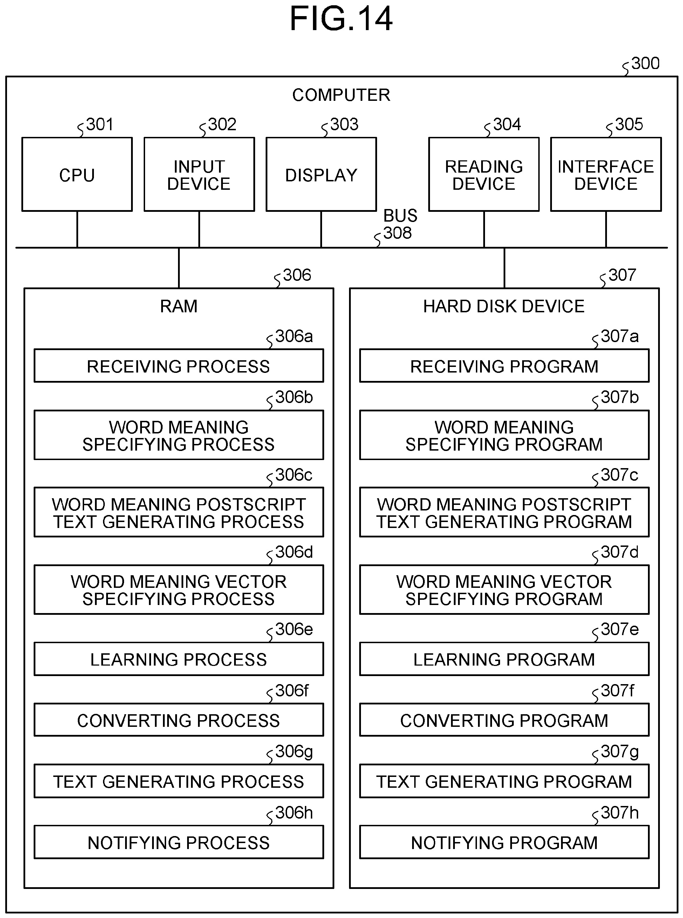

In the following, a description will be given of an example of a hardware configuration of a computer that implements the same function as that performed by the information processing apparatus 100 according to the embodiment. FIG. 14 is a diagram illustrating an example of the hardware configuration of the computer that implements the same function as that performed by the information processing apparatus according to the embodiment.

As illustrated in FIG. 14, a computer 300 includes a CPU 301 that executes various kinds of arithmetic processing, an input device 302 that receives an input of data from a user, and a display 303. Furthermore, the computer 300 includes a reading device 304 that reads programs or the like from a storage medium and an interface device 305 that sends and receives data to and from an external device or the like via a wired or wireless network. The computer 300 includes a RAM 306 that temporarily stores therein various kinds of information and a hard disk device 307. Each of the devices 301 to 307 is connected to a bus 308.

The hard disk device 307 includes a receiving program 307a, a word meaning specifying program 307b, a word meaning postscript text generating program 307c, a word meaning vector specifying program 307d, and a learning program 307e. Furthermore, the hard disk device 307 includes a converting program 307f, a text generating program 307g, and a notifying program 307h. The CPU 301 reads the receiving program 307a, the word meaning specifying program 307b, the word meaning postscript text generating program 307c, the word meaning vector specifying program 307d, and the learning program 307e and loads the programs in the RAM 306. The CPU 301 reads the converting program 307f, the text generating program 307g, and the notifying program 307h and loads the programs in the RAM 306.

The receiving program 307a functions as a receiving process 306a. The word meaning specifying program 307b functions as a word meaning specifying process 306b. The word meaning postscript text generating program 307c functions as a word meaning postscript text generating process 306c. The word meaning vector specifying program 307d functions as a word meaning vector specifying process 306d. The learning program 307e functions as a learning process 306e. The converting program 307f functions as a converting process 306f. The text generating program 307g functions as a text generating process 306g. The notifying program 307h functions as a notifying process 306h.

The process of the receiving process 306a corresponds to the process of the receiving unit 160a. The process of the word meaning specifying process 306b corresponds to the process of the word meaning specifying unit 160b. The process of the word meaning postscript text generating process 306c corresponds to the process of the word meaning postscript text generating unit 160c. The process of the word meaning vector specifying process 306d corresponds to the process of the word meaning vector specifying unit 160d. The process of the learning process 306e corresponds to the process of the learning unit 160e. The process of the converting process 306f corresponds to the process of the converting unit 160f. The process of the text generating process 306g corresponds to the process of the text generating unit 160g. The process of the notifying process 306h corresponds to the process of the notifying unit 160h.

Furthermore, each of the programs 307a to 307h does not need to be stored in the hard disk device 307 in advance from the beginning. For example, each of the programs is stored in a "portable physical medium", such as a flexible disk (FD), a CD-ROM, a DVD disk, a magneto-optic disk, an IC CARD, that is to be inserted into the computer 300. Then, the computer 300 may also read each of the programs 307a to 307h from the portable physical medium and execute the programs.

Reference Signs List

| | |
|---|---|
| 100 | information processing apparatus |
| 110 | communication unit |
| 120 | input unit |
| 130 | display unit |
| 150 | storage unit |
| 150a | word meaning HMM |
| 150b | first vector table |
| 150c | second vector table |
| 150d | teacher data table |
| 150e | code conversion table |
| 150f | dictionary information |
| 150g | RNN data |
| 150h | input sentence data |
| 150i | output sentence data |

**Claims**

1. A generating method that causes a computer to execute a process comprising:

   receiving text information;
   extracting a plurality of words included in the received text information;
   specifying, from among the plurality of extracted words, by referring to a storage unit that stores therein, for each of word meanings of the words each including a plurality of word meanings, co-occurrence information on another word with respect to the words, a word meaning of one of the words each including the plurality of word meanings based on the co-occurrence information on the other word with respect to the one of the words; and
   generating word meaning postscript text information that includes the one of the words and a character that identifies the specified word meaning.

2. The generating method according to claim 1, wherein
   the specifying specifies a polysemous word included in the text information and information that identifies a word meaning of the polysemous word, and
   the generating the adds a character that identifies the word meaning of the polysemous word to the word acting as the polysemous word and generates the word meaning postscript text information in which a combination of the word acting as the polysemous word and the character that identifies the word meaning is a section of a single word.

3. The generating method according to claim 2, wherein
   the receiving receives first text information written in a first language and second text information written in a second language,
the specifying specifies, from the first text information and the second text information, a polysemous word and information that identifies the polysemous word, and
the generating

generates, based on the polysemous word and the information that identifies the polysemous word that are specified from the first text information, first word meaning postscript text information in which a combination of a word acting as a polysemous word and a character that identifies the word meaning is a section of a single word, and

generates, based on the polysemous word and the information that identifies the polysemous word specified from the second text information, second word meaning postscript text information in which a combination of a word acting as a polysemous word and a character that identifies the word meaning is a section of a single word.

4. The generating method according to claim 3, further comprising:

specifying, by referring to a storage unit in which the polysemous word and the information that identifies the word meaning of the polysemous word are stored in association with a word meaning vector, a first word meaning vector of the word of the first word meaning postscript text information and a second word meaning vector of the word of the second word meaning postscript text information; and

learning parameters of a conversion model such that a word meaning vector that is output when the first word meaning vector specified from a first word included in the first word meaning postscript text information is input to the conversion model approaches a second word meaning vector specified from a second word that is similar to the first word and that is included in the second word meaning postscript text information.

5. The generating method according to claim 4, wherein
the receiving receives third text information written in the first language,
the specifying specifies a polysemous word and information that identifies the polysemous word from the third text information,
the generating generates, based on the polysemous word and the information that identifies the polysemous word specified from the third text information, third word meaning postscript text information in which a combination of a word acting as a polysemous word and a character that identifies the word meaning is a section of a single word,
the specifying specifies, by referring to a storage unit in which the polysemous word and the information that identifies the word meaning of the polysemous word are stored in association with the word meaning vector, a third word meaning vector of the word of the third word meaning postscript text information, and the generating method further comprises:

converting the third word meaning vector to a fourth word meaning vector by inputting the third word meaning vector to the learned conversion model; and
generating fourth text information written in the second language based on the fourth word meaning vector.

6. A generating program that causes a computer to execute a process comprising:

receiving text information;
extracting a plurality of words included in the received text information;
specifying, from among the plurality of extracted words, by referring to a storage unit that stores therein, for each of word meanings of the words each including a plurality of word meanings, co-occurrence information on another word with respect to the words, a word meaning of one of the words each including the plurality of word meanings based on the co-occurrence information on the other word with respect to the one of the words; and

generating word meaning postscript text information that includes the one of the words and a character that identifies the specified word meaning.

7. The generating program according to claim 6, wherein
the specifying specifies a polysemous word included in the text information and information that identifies a word meaning of the polysemous word, and
the generating adds a character that identifies the word meaning of the polysemous word to the word acting as the polysemous word and generates the word meaning postscript text information in which a combination of the word acting as the polysemous word and the character that identifies the word meaning is a section of a single word.

**8.** The generating program according to claim 7, wherein
the receiving receives first text information written in a first language and second text information written in a second language,
the specifying specifies, from the first text information and the second text information, a polysemous word and information that identifies the polysemous word, and
the generating

generates, based on the polysemous word and the information that identifies the polysemous word that are specified from the first text information, first word meaning postscript text information in which a combination of a word acting as a polysemous word and a character that identifies the word meaning is a section of a single word, and
generates, based on the polysemous word and the information that identifies the polysemous word specified from the second text information, second word meaning postscript text information in which a combination of a word acting as a polysemous word and a character that identifies the word meaning is a section of a single word.

**9.** The generating program according to claim 8, further comprising:

specifying, by referring to a storage unit in which the polysemous word and the information that identifies the word meaning of the polysemous word are stored in association with a word meaning vector, a first word meaning vector of the word of the first word meaning postscript text information and a second word meaning vector of the word of the second word meaning postscript text information; and
learning parameters of a conversion model such that a word meaning vector that is output when the first word meaning vector specified from a first word included in the first word meaning postscript text information is input to the conversion model approaches a second word meaning vector specified from a second word that is similar to the first word and that is included in the second word meaning postscript text information.

**10.** The generating program according to claim 9, wherein
the receiving receives third text information written in the first language,
the specifying specifies a polysemous word and information that identifies the polysemous word from the third text information,
the generating generates, based on the polysemous word and the information that identifies the polysemous word specified from the third text information, third word meaning postscript text information in which a combination of a word acting as a polysemous word and a character that identifies the word meaning is a section of a single word,
the specifying specifies, by referring to a storage unit in which the polysemous word and the information that identifies the word meaning of the polysemous word are stored in association with the word meaning vector, a third word meaning vector of the word of the third word meaning postscript text information, and the generating program further comprises:

converting the third word meaning vector to a fourth word meaning vector by inputting the third word meaning vector to the learned conversion model; and
generating fourth text information written in the second language based on the fourth word meaning vector.

**11.** An information processing apparatus comprising:

a receiving unit that receives text information;
a word meaning specifying unit that extracts a plurality of words included in the received text information and that specifies, from among the plurality of extracted words, by referring to a storage unit that stores therein, for each of word meanings of the words each including a plurality of word meanings, co-occurrence information on another word with respect to the words, a word meaning of one of the words each including the plurality of word meanings based on the co-occurrence information on the other word with respect to the one of the words; and
a word meaning postscript text generating unit that generates word meaning postscript text information that includes the one of the words and a character that identifies the specified word meaning.

**12.** The information processing apparatus according to claim 11, wherein
the word meaning specifying unit specifies a polysemous word included in the text information and information that identifies a word meaning of the polysemous word, and
the word meaning postscript text generating unit adds a character that identifies the word meaning of the polysemous word to the word acting as the polysemous word and generates the word meaning postscript text information in which a combination of the word acting as the polysemous word and the character that identifies the word meaning is a section of a single word.

13. The information processing apparatus according to claim 12, wherein
the receiving unit receives first text information written in a first language and second text information written in a second language,
the word meaning specifying unit specifies, from the first text information and the second text information, a polysemous word and information that identifies the polysemous word, and
the word meaning postscript text generating unit

generates, based on the polysemous word and the information that identifies the polysemous word specified from the first text information, first word meaning postscript text information in which a combination of a word acting as a polysemous word and a character that identifies the word meaning is a section of a single word, and
generates, based on the polysemous word and the information that identifies the polysemous word specified from the second text information, second word meaning postscript text information in which a combination of a word acting as a polysemous word and a character that identifies the word meaning is a section of a single word.

14. The information processing apparatus according to claim 13, further comprising:

a word meaning vector specifying unit that specifies, by referring to a storage unit in which the polysemous word and the information that identifies the word meaning of the polysemous word are stored in association with a word meaning vector, a first word meaning vector of the word of the first word meaning postscript text information and a second word meaning vector of the word of the second word meaning postscript text information; and
a learning unit that learns parameters of a conversion model such that a word meaning vector that is output when the first word meaning vector specified from a first word included in the first word meaning postscript text information is input to the conversion model approaches a second word meaning vector specified from a second word that is similar to the first word and that is included in the second word meaning postscript text information.

15. The information processing apparatus according to claim 14, wherein
the receiving unit receives third text information written in the first language,
the word meaning specifying unit specifies a polysemous word and information that identifies the polysemous word from the third text information,
the word meaning postscript text generating unit generates, based on the polysemous word and the information that identifies the polysemous word specified from the third text information, third word meaning postscript text information in which a combination of a word acting as a polysemous word and a character that identifies the word meaning is a section of a single word,
the word meaning vector specifying unit specifies, by referring to a storage unit in which the polysemous word and the information that identifies the word meaning of the polysemous word are stored in association with the word meaning vector, a third word meaning vector of the word of the third word meaning postscript text information, and
the information processing apparatus further comprises:

a converting unit that converts the third word meaning vector to a fourth word meaning vector by inputting the third word meaning vector to the conversion model learned by the learning unit; and
a text generating unit that generates fourth text information written in the second language based on the fourth word meaning vector.

# FIG.1

~10
"She drinks cool juice." "KANOJYO HA TUMETAI JYU-SU WO NOMU."
"He has cool think." "KARE HA REISEI-NA KANGAE WO MOTTE IRU."

~10a
"She△drinks△cool△juice△." "KANOJYO△HA△TUMETAI△JYU-SU△WO△NOMU△."
"He△has△cool△think△." "KARE△HA△REISEI-NA△KANGAE△WO△MOTTE△IRU△."

~150a

| POLYSEMOUS WORD | WORD MEANING ID | CO-OCCURRENCE WORDS (CO-OCCURRENCE RATE) | ... | CO-OCCURRENCE WORDS (CO-OCCURRENCE RATE) |
|---|---|---|---|---|
| cool | (1) | juice (10%) | ... | beer (9%) |
| | (2) | think (11%) | ... | idea (9%) |
| | ... | ... | ... | ... |

...

~10b
"She△drinks△cool(1)△juice△." "KANOJYO△HA△TUMETAI△JYU-SU△WO△NOMU△."
"He△has△cool(2)△think△." "KARE△HA△REISEI-NA△KANGAE△WO△MOTTE△IRU△."

EP 3 828 752 A1

# FIG.2

HASH FILTER — 15

POINTER (cool(1)△) — 15a

POINTER (cool(2)△) — 15b

16

...

Vec1-1

...

Vec1-2

...

# FIG.3

# FIG.4

# FIG.5

INFORMATION PROCESSING APPARATUS 100

| | |
|---|---|
| **CONTROL UNIT** 160 | **STORAGE UNIT** 150 |

COMMUNICATION UNIT 110

INPUT UNIT 120

DISPLAY UNIT 130

RECEIVING UNIT 160a

WORD MEANING SPECIFYING UNIT 160b

WORD MEANING POSTSCRIPT TEXT GENERATING UNIT 160c

WORD MEANING VECTOR SPECIFYING UNIT 160d

LEARNING UNIT 160e

CONVERTING UNIT 106f

TEXT GENERATING UNIT 106g

NOTIFYING UNIT 106h

WORD MEANING HMM 150a

FIRST VECTOR TABLE 150b

SECOND VECTOR TABLE 150c

TEACHER DATA TABLE 150d

RNN DATA 150e

INPUT DATA 150f

OUTPUT DATA 150g

# FIG.6

150b

| WORD IN FIRST LANGUAGE | FIRST VECTOR |
|---|---|
| ... | ... |
| cool(1) | Ve1-1 |
| cool(2) | Ve1-2 |
| ... | ... |

# FIG.7

150c

| WORD IN SECOND LANGUAGE | SECOND VECTOR |
|---|---|
| ... | ... |
| TUMETAI | Ve2-1 |
| ... | ... |
| REISEI-NA | Ve2-2 |
| ... | ... |

# FIG.8

150d

| INPUT SENTENCE | OUTPUT SENTENCE |
|---|---|
| She drinks cool juice. | KANOJYO HA TUMETAI JYU-SU WO NOMU. |
| He has cool think. | KARE HA REISEI-NA KANGAE WO MOTTE IRU. |
| Please translate this sentence. | KONO BUN WO YAKU-SHITE KUDA-SAI. |
| … | … |

# FIG.9

150g

| RNN IDENTIFICAION INFORMATION | PARAMETER |
|---|---|
| 61-1 | PARAMETER SET IN INTERMEDIATE LAYER 61-1 |
| 61-2 | PARAMETER SET IN INTERMEDIATE LAYER 61-2 |
| 61-3 | PARAMETER SET IN INTERMEDIATE LAYER 61-3 |
| … | … |
| 61-n | PARAMETER SET IN INTERMEDIATE LAYER 61-n |
| 63-1 | PARAMETER SET IN INTERMEDIATE LAYER 63-1 |
| 63-2 | PARAMETER SET IN INTERMEDIATE LAYER 63-2 |
| … | … |
| 63-n | PARAMETER SET IN INTERMEDIATE LAYER 63-n |

# FIG.10

# FIG.11

```
          ┌─────────────┐
          │    START    │
          └─────────────┘
                 │
                 ▼           ⌐S101
   ┌────────────────────────────────┐
   │   RECEIVE TEACHER DATA TABLE    │
   └────────────────────────────────┘
                 │
                 ▼           ⌐S102
   ┌────────────────────────────────┐
   │   ACQUIRE TEACHER DATA FROM     │
   │      TEACHER DATA TABLE         │
   └────────────────────────────────┘
                 │
                 ▼           ⌐S103
   ┌────────────────────────────────┐
   │ WORD MEANING POSTSCRIPT PROCESS │
   └────────────────────────────────┘
                 │
                 ▼           ⌐S104
   ┌────────────────────────────────┐
   │ ASSIGN FIRST VECTOR TO EACH WORD│
   │ INCLUDED IN WORD MEANING        │
   │ POSTSCRIPT INPUT SENTENCE       │
   └────────────────────────────────┘
                 │
                 ▼           ⌐S105
   ┌────────────────────────────────┐
   │ ASSIGN SECOND VECTOR TO EACH    │
   │ WORD INCLUDED IN WORD MEANING   │
   │ OUTPUT SENTENCE                 │
   └────────────────────────────────┘
                 │
                 ▼           ⌐S106
   ┌────────────────────────────────┐
   │ INPUT EACH FIRST VECTOR TO      │
   │ CORRESPONDING INTERMEDIATE      │
   │ LAYER IN RNN AND ADJUST         │
   │ PARAMETERS SUCH THAT EACH       │
   │ VECTOR OUTPUT FROM              │
   │ CORRESPONDING INTERMEDIATE      │
   │ LAYER IN RNN APPROACH           │
   │ CORRESPONDING SECOND VECTOR     │
   └────────────────────────────────┘
                 │
                 ▼           ⌐S107           YES
            ◇ CONTINUE LEARNING? ◇───────────────┐
                 │                                │
                 │ NO                   ⌐S108     ▼
                 ▼                 ┌──────────────────────┐
          ┌─────────────┐         │ ACQUIRE NEW TEACHER   │
          │     END     │         │ DATA FROM TEACHER     │
          └─────────────┘         │ DATA TABLE            │
                                  └──────────────────────┘
```

# FIG.12

```
          ┌─────────────┐
          │    START    │
          └─────────────┘
                 │
                 ▼              ⌐S201
   ┌────────────────────────────────┐
   │      ACQUIRE INPUT SENTENCE     │
   └────────────────────────────────┘
                 │
                 ▼              ⌐S202
   ┌────────────────────────────────┐
   │    PERFORM MORPHOLOGICAL        │
   │    ANALYSIS ON INPUT SENTENCE   │
   └────────────────────────────────┘
                 │
                 ▼              ⌐S203
   ┌────────────────────────────────┐
   │  SPECIFY TARGET WORD AND WORD   │
   │  MEANING ID BASED ON EACH WORD  │
   │  IN INPUT SENTENCE AND          │
   │  WORD MEANING HMM               │
   └────────────────────────────────┘
                 │
                 ▼              ⌐S204
   ┌────────────────────────────────┐
   │  GENERATE WORD MEANING          │
   │  POSTSCRIPT INPUT SENTENCE BY   │
   │  ADDING, AS POSTSCRIPT, WORD    │
   │  MEANING ID AFTER TARGET WORD   │
   │  INCLUDED IN INPUT SENTENCE     │
   └────────────────────────────────┘
                 │
                 ▼              ⌐S205
   ┌────────────────────────────────┐
   │     ACQUIRE OUTPUT SENTENCE     │
   └────────────────────────────────┘
                 │
                 ▼              ⌐S206
   ┌────────────────────────────────┐
   │    PERFORM MORPHOLOGICAL        │
   │    ANALYSIS ON OUTPUT SENTENCE  │
   └────────────────────────────────┘
                 │
                 ▼              ⌐S207
   ┌────────────────────────────────┐
   │  SPECIFY TARGET WORD AND WORD   │
   │  MEANING ID BASED ON EACH WORD  │
   │  IN OUTPUT SENTENCE AND         │
   │  WORD MEANING HMM               │
   └────────────────────────────────┘
                 │
                 ▼              ⌐S208
   ┌────────────────────────────────┐
   │  GENERATE WORD MEANING          │
   │  POSTSCRIPT INPUT SENTENCE BY   │
   │  ADDING, AS POSTSCRIPT, WORD    │
   │  MEANING ID AFTER TARGET WORD   │
   │  INCLUDED IN OUTPUT SENTENCE    │
   └────────────────────────────────┘
                 │
                 ▼
          ┌─────────────┐
          │     END     │
          └─────────────┘
```

# FIG.13

START

S301

RECEIVE INPUT SENTENCE DATA

S302

PERFORM MORPHOLOGICAL ANALYSIS
ON INPUT SENTENCE

S303

SPECIFY TARGET WORD AND WORD MEANING ID
BASED ON EACH WORD IN INPUT SENTENCE AND
WORD MEANING HMM

S304

GENERATE WORD MEANING POSTSCRIPT INPUT
SENTENCE BY ADDING, AS POSTSCRIPT, WORD
MEANING ID AFTER TARGET WORD INCLUDED IN
INPUT SENTENCE

S305

ASSIGN FIRST VECTOR TO EACH WORD INCLUDED
IN INPUT SENTENCE

S306

INPUT EACH FIRST VECTOR TO CORRESPONDING
INTERMEDIATE LAYER IN RNN AND ACQUIRE EACH
SECOND VECTOR OUTPUT FROM CORRESPONDING
INTERMEDIATE LAYER IN RNN

S307

REFER TO SECOND VECTOR TABLE AND CONVERT
EACH SECOND VECTOR TO WORD

S308

GENERATE OUTPUT SENTENCE DATA

S309

NOTIFY EXTERNAL DEVICE OF
OUTPUT SENTENCE DATA

END

# FIG.14

~300

**COMPUTER**

| ~301 | ~302 | ~303 | ~304 | ~305 |
|---|---|---|---|---|
| CPU | INPUT DEVICE | DISPLAY | READING DEVICE | INTERFACE DEVICE |

BUS
~308

| ~306 | ~307 |
|---|---|
| **RAM** | **HARD DISK DEVICE** |
| ~306a | ~307a |
| RECEIVING PROCESS | RECEIVING PROGRAM |
| ~306b | ~307b |
| WORD MEANING SPECIFYING PROCESS | WORD MEANING SPECIFYING PROGRAM |
| ~306c | ~307c |
| WORD MEANING POSTSCRIPT TEXT GENERATING PROCESS | WORD MEANING POSTSCRIPT TEXT GENERATING PROGRAM |
| ~306d | ~307d |
| WORD MEANING VECTOR SPECIFYING PROCESS | WORD MEANING VECTOR SPECIFYING PROGRAM |
| ~306e | ~307e |
| LEARNING PROCESS | LEARNING PROGRAM |
| ~306f | ~307f |
| CONVERTING PROCESS | CONVERTING PROGRAM |
| ~306g | ~307g |
| TEXT GENERATING PROCESS | TEXT GENERATING PROGRAM |
| ~306h | ~307h |
| NOTIFYING PROCESS | NOTIFYING PROGRAM |

**EP 3 828 752 A1**

<table>
<tr><td colspan="2" style="text-align:center">INTERNATIONAL SEARCH REPORT</td><td colspan="2">International application No.<br>PCT/JP2018/027571</td></tr>
<tr><td colspan="4">A. CLASSIFICATION OF SUBJECT MATTER<br>Int.Cl. G06F17/28(2006.01)i, G06F17/27(2006.01)i, G06F17/30(2006.01)i<br><br>According to International Patent Classification (IPC) or to both national classification and IPC</td></tr>
<tr><td colspan="4">B. FIELDS SEARCHED</td></tr>
<tr><td colspan="4">Minimum documentation searched (classification system followed by classification symbols)<br>Int.Cl. G06F17/27-17/30</td></tr>
<tr><td colspan="4">Documentation searched other than minimum documentation to the extent that such documents are included in the fields searched<br>Published examined utility model applications of Japan     1922-1996<br>Published unexamined utility model applications of Japan    1971-2018<br>Registered utility model specifications of Japan       1996-2018<br>Published registered utility model applications of Japan    1994-2018</td></tr>
<tr><td colspan="4">Electronic data base consulted during the international search (name of data base and, where practicable, search terms used)</td></tr>
</table>

C. DOCUMENTS CONSIDERED TO BE RELEVANT

| Category* | Citation of document, with indication, where appropriate, of the relevant passages | Relevant to claim No. |
|---|---|---|
| Y | 福本文代 他１名, コーパスに基づく動詞の多義解消, 自然言語処理, 10 April 1997, vol. 4, no. 2, pp. 21-39, (FUKUMOTO, Fumiyo et al., "Word-Sense Disambiguation Using the Extracted Polysemous Information from Corpora", Journal of natural language processing) | 1-15 |
| Y | 増田嵩志 他１名, ニューラルネットワーク日英機械翻訳における品詞情報の利用, 言語処理学会第22回年次大会発表論文集, 29 February 2016, pp. 294-297, non-official translation (MATSUDA, Takashi et al., "Use of word class information in neural network Japanese-English machine translation", Presentation proceedings of the 22th annual conference of the Association for Natural Language Processing) | 1-15 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>10 October 2018 (10.10.2018) | Date of mailing of the international search report<br>23 October 2018 (23.10.2018) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**EP 3 828 752 A1**

**Patent documents cited in the description**

- JP 2012141679 A
- JP 2017511914 A
- JP 2013020431 A